Europäisches Patentamt

European Patent Office

Office européen des brevets

(11) Veröffentlichungsnummer: **0 302 126 B1**

(12) **EUROPÄISCHE PATENTSCHRIFT**

(45) Veröffentlichungstag der Patentschrift: 06.11.91

(51) Int. Cl.⁵: **B60K 5/12, F16F 3/08**

(21) Anmeldenummer: 87111191.0

(22) Anmeldetag: 03.08.87

(54) **Trockenlager.**

(43) Veröffentlichungstag der Anmeldung:
**08.02.89 Patentblatt 89/06**

(45) Bekanntmachung des Hinweises auf die
Patenterteilung:
**06.11.91 Patentblatt 91/45**

(84) Benannte Vertragsstaaten:
**DE FR GB IT**

(56) Entgegenhaltungen:
| | |
|---|---|
| EP-A- 0 038 547 | DE-A- 2 317 856 |
| DE-A- 3 008 168 | DE-A- 3 238 924 |
| DE-A- 3 506 977 | DE-U- 1 791 052 |
| DE-U- 1 913 901 | DE-U- 1 937 540 |
| FR-A- 1 584 110 | FR-A- 2 328 891 |

(73) Patentinhaber: **WOCO Franz-Josef Wolf & Co.**
**Sprudelallee 19**
**W-6483 Bad Soden-Salmünster(DE)**

(84) Benannte Vertragsstaaten:
**DE FR GB IT**

Patentinhaber: **Volkswagen AG**

**W-3180 Wolfsburg 1(DE)**

(84) Benannte Vertragsstaaten:
**DE FR**

(72) Erfinder: **Wolf, Franz-Josef**
**Sprudelallee 19,**
**W-6483 Bad Soden-Salmuenster,(DE)**
Erfinder: **Pietsch, Hubert**
**Am Quellenrain 13,**
**W-6483 Bad Soden-Salmuenster,(DE)**

(74) Vertreter: **Jaeger, Klaus, Dipl.-Chem. Dr. et al**
**Jaeger, Steffens & Köster Patentanwälte**
**Pippinplatz 4a**
**W-8035 München-Gauting(DE)**

### Beschreibung

Die Erfindung betrifft ein körperschallisolierendes Lager der im Oberbegriff des Patentanspruchs 1 genannten Art, insbesondere ein Lager zum weichen Lagern der Brennkraftmaschine eines Kraftfahrzeugs. Ein derartiges Lager ist aus EP-A-268734 (Veröffentlicht 01.06.1988) bekannt (Art.54-(3)EPÜ).

Speziell betrifft die Erfindung ein Trockenlager, und zwar insbesondere ein weiches Trockenlager. Der hier gewählte Begriff "Trockenlager" soll dabei klarstellen und betonen, daß das hier in Rede stehende Lager im Gegensatz zu den insbesondere zum Lagern der Brennkraftmaschine eines Kraftfahrzeugs heute üblicherweise verwendeten Hydrolagern, das heißt Lagern mit hydraulischer Dämpfung, ein reines Gummi-Metall-Lager ohne hydraulische Hilfsmittel ist.

Mit dem Begriff des "weichen" Lagers ist in gebräuchlicher Weise ein flacher Verlauf der Federkennlinie des Lagers im Arbeitsbereich angesprochen, wobei dieser flache Kennlinienverlauf linear oder schwach progressiv ausgelegt sein kann.

Typisch für weiche Lager jeder Art ist das meist recht unerwünschte Problem der langen Federwege bei relativ zur Tragkraft der Tragfeder des weichen Lagers relativ großen abzufedernden Massen. Dieses Problem tritt auch bei einem Einsatz der hier in Rede stehenden körperschallisolierenden weichen Trockenlager zur Lagerung der Brennkraftmaschine eines Kraftfahrzeugs auf. Um überweite Amplituden eines weich gelagerten schwingenden Motorblocks mit allen seinen Auswirkungen auf die Fahrsicherheit und dem Komfort des Kraftfahrzeugs auszuschließen, wird der Kompromiß einer engen beidseitigen Federwegbegrenzung durch gummigepufferte Anschläge in Kauf genommen.

Im Rahmen solcher Anwendungen hat sich ein Trockenlager als besonders geeignet erwiesen, bei dem ein weicher Tragfederblock aus einem elastischen Werkstoff zwischen zwei krafteinleitenden Lagergehäusetöpfen angeordnet ist, die einander mit Spiel koaxial teleskopartig und unter Bildung eines zweiseitigen Federwegbegrenzers übergreifen und gleichzeitig durch entsprechende Mantelgestaltungen axial unter Bildung eines Federwegbegrenzers hintergreifen. Dieser Hintergriff kann dabei in der Weise ausgestaltet sein, daß ein in einzelne Zungenabschnitte aufgegliederter Innenflansch oder Außenflansch eines der beiden Lagergehäusetöpfe durch mit abgewinkelten Laschen ausgestattete Ausschnitte des jeweils anderen Lagergehäusetopfes hindurchgreift, oder, daß ein Außenflanschring eines der beiden Lagertöpfe in eine übergreifende Ringnut eingreift, die an dem jeweils anderen Lagertopf ausgebildet ist.

Unabhängig von der speziellen konstruktiven Ausgestaltung des Federwegbegrenzers in einer der beiden vorstehend angeordneten Möglichkeiten oder in irgeneiner weiteren Auslegung wird dieser Federwegbegrenzer in jedem Fall mit Elastomergepufferten Anschlagpuffern arbeiten müssen, wobei diese Anschlagpuffer sowohl als einfache weiche Vollgummipuffer oder als Lochgummipuffer oder als aktive Knickpuffer ausgebildet sein können. Dabei wird unter einem "Knickpuffer" ein spezieller Lochguxmipuffer verstanden, der bei Druckverformung durch ein Ausbiegen von Materialstegen nach Überschreiten einer konstruktiv vorgegebenen kritischen Druckbelastung eine Unterbrechung der tragenden Elastomersäule und damit ein Zusammenbrechen der elastischen Tragfähigkeit zeigt. Durch solche über die Anschlagsbegrenzung in die Federkennlinie der weichen Tragfeder eingeschaltete aktive Knickpuffer kann eine optimale Ausnutzung des oberen linearen Bereichs der Kennlinie der weichen Tragfeder bei kurzem effektivem Federweg erzielt werden.

Solche Knickpuffer weisen typischerweise einen relativ steilen und steifen Einsatz der Federkennlinie auf. Sie zeigen also ein vergleichsweise hartes Einfedern. Dieses harte Einfedern der Knickfederpuffer kann in der hier beschriebenen Kombination mit einer weichen Tragfeder, in der die Knickpuffer als Anschlagpuffer verwendet werden, dadurch gemildert werden bzw. in einen Bereich verschoben werden, in der das harte Einfedern der Knickpuffer in der Gesamtfederwirkung nicht mehr spürbar ist, daß die Knickpuffer einseitig oder beidseitig im Ruhezustand eines solcherart kombinierten Lagers die Anschlagflächen nicht berühren. Bei Krafteinleitung in ein solches Lager wird dann zunächst das Einschwingen durch den Freigang der weichen Tragfeder bestimmt. Erst anschließend tritt dann der Schluß zwischen der als Widerlager dienenden Anschlagfläche des einen Gehäuseteils mit der zugeordneten Anschlagfläche des Knickpuffers des anderen Gehäuseteils ein. Da zu diesem Zeitpunkt jedoch der Einfedervorgang bereits eine bestimmte Beschleunigung erreicht hat, wird in der Gesamtwirkung des Lagers der harte Einsatz des Knickpuffers nicht mehr wahrgenommen.

Mit dieser Ausgestaltung eines weichen Trockenlagers wird ein optimales Federverhalten des Gesamtlagers erzielt und zwar insbesondere für das spezielle Lagerproblem einer Brennkraftmaschine in einem Kraftfahrzeug, bei dem eine relativ große Masse weich und "komfortabel" abgefedert werden muß, die niederfrequenten Schwingungen mit vergleichsweise großer Amplitude ausgesetzt ist.

Noch nicht befriedigend gelöst ist bei einem Lager dieser Art jedoch der akustische Komfort. Das Aufschlagen der Knickfederanschlagfläche auf die Anschlagfläche des mit dem Knickpuffer zusammenwirkenden Gehäuseteils tritt ein Schlaggeräusch auf, das über die Lageranschlüsse in das Fahrgestell des Kraftfahrzeugs eingeleitet wird und dort als den Fahrkomfort beeinträchtigend störend wahrnehmbar ist.

Ausgehend von diesem Stand der Technik liegt der Erfindung die Aufgabe zugrunde, ein Lager der vorstehend beschriebenen Art akustisch zur Ruhe zu bringen, das heißt, das bei dynamischer Belastung eines solchen Lagers auftretende Anschlaggeräusch auszuschalten und/oder so zu dämpfen und/oder abzukoppeln, daß es das Lager nicht verläßt.

Die Erfindung löst diese Aufgabe bei einem Lager der eingangs beschriebenen Art durch die im kennzeichnenden Teil des Anspruchs 1 genannten Merkmale.

Der wesentliche Erfindungsgedanke beruht also darauf, in Serie vor den aktiven Anschlagpuffer, nämlich in Serie vor dem Knickpuffer des hier in Rede stehenden Lagers, noch einmal einen Anschlagvorpuffer zu setzen, der ein weiches Einfedern und Auffedern des aktiven Anschlagpuffers, nämlich des Knickpuffers, auf der mit diesem zusammenwirkenden Anschlagfläche bewirkt. Dieser Vorpuffer hat die Form weicher Anschlagnoppen, das heißt,hat die Form axial vorspringender flacher noppenartiger, stegförmiger oder ringstegförmiger Erhebungen, die auf der Anschlagoberfläche des oder der Knickpuffer vorzugsweise gleichmäßig, alternativ aber auch zu symmetrisch auf der Knickpufferoberfläche verteilenden Gruppen zusammengefaßt angeordnet sind.

Diese Anschlagnoppen bestehen vorzugsweise aus dem gleichen Elastomer wie die Knickpuffer und sind integral mit diesen als fester Bestandteil der Knickpuffer selbst ausgebildet. Alternativ können diese Anschlagnoppen jedoch auch aus einem anderen, insbesondere weicherem Elastomer auf die Anschlagoberflächen der Knickpuffer aufvulkanisiert oder, nach separater Vorfertigung, aufgeklebt oder anderweitig auf diesen Anschlagflächen befestigt werden.

Vorzugsweise sind diese Anschlagnoppen geometrisch so ausgebildet, daß sie im Profil eine breitere Basis und eine verjüngte Krone aufweisen, die durch eine leichtere Verformbarkeit und geringere Rückstellkraft ein weicheres Einsetzen der Federwirkung der Anschlagnoppen bewirkt. Diese Anschlagnoppen selbst können dabei entweder in Form isolierter Noppen, beispielsweise also in Form kegelförmiger, kegelstumpfförmiger oder halbkugelförmiger Erhebungen auf der Anschlagoberfläche der Knickpuffer ausgebildet sein, können aber auch linear ausgedehntere Gebilde sein, beispielsweise also Rippen, Stege oder Ringstege, insbesondere mit dem vorstehend beschriebenen zur Krone hin verjüngten Profil.

Gemäß einer Ausgestaltung der Erfindung sind die beiden Lagergehäuseteile des Trockenlagers so ausgebildet, daß der eine der beiden Lagertöpfe einen Außenflansch trägt und der andere eine nach radial innen offene Ringkammer aufweist, in die der Außenflansch mit axialem und radialem Spiel eingreift. Bei dieser Ausgestaltung der Anschläge kann entweder der Außenflansch die Knickpuffer beider Anschläge des Federwegbegrenzers tragen, kann also auf beiden einander axial gegenüberliegenden Ringflächen Knickpuffer mit den Vorpuffern gemäß der Erfindung tragen, oder können die Radialflächen der Ringkammer die mit den Vorpuffern ausgestatteten Knickpuffer tragen, so daß der ungepufferte Außenflansch des Lagergegentopfes in den Zwischenraum zwischen die beiden Anschlagflächen der Knickpuffer in die Ringkammer hineinragt. Dabei können die Anschlagabstände so bemessen sein, daß zwischen den Anschlagflächen des jeweiligen Lagergehäusetopfes und den Anschlagoberflächen der zugeordneten Knickpuffer ein geringes Spiel bleibt. Wenn ein solches Spiel vorgesehen ist, ist das Verhalten des Lagers gemäß der Erfindung mit dem eingangs beschriebenen "einfachen" Knickpuffer gepufferten weichen Trockenlager identisch, da die Lagerkennlinie ausschließlich durch die Kennlinie der weichen Tragfeder bestimmt wird.

Im weiteren Verlauf des Einschwingens setzen dann aber im Gegensatz zu dem eingangs beschriebenen Lager zunächst die Kronenbereiche der Anschlagnoppen auf den Knickpuffern auf den Anschlagflächen auf, wodurch ein besonders weiches und vor allem praktisch lautloses Einfedern erzielt wird.

Das genaue Einjustieren der axialen Höhe des Flansches zwischen den beiden Knickpuffern bzw. des Flansches mit den beiden Knickpuffern zwischen den beiden als Anschlagringflächen dienenden Radialflächen der Ringnut kann entweder im unbelasteten Zustand des Lagers erfolgen oder durch Vorspannen der Tragfeder in der Weise bewirkt werden, daß die Ruhestellung des Flansches bei statischer Auflast der bestimmungsgemäß abzufedernden trägen Masse erreicht wird.

Vorzugsweise wird jedoch das gesamte Anschlagsystem, bestehend aus dem Flansch, der Ringnut mit den beiden als Anschlagflächen dienenden Radialflächen, den Knickpuffern und den Anschlagnoppen, so justiert, daß die Kronen der Anschlagnoppen die mit ihnen zusammenwirkenden Anschlagflächen in der bestimmungsgemäßen Ruhelage des Lagers eben gerade lose berühren. Diese Justierung kann dabei wiederum entweder im entspannten Zustand der Tragfeder, also ohne Auflast, vorgenommen werden, oder kann alternativ und vorzugsweise unter einer solchen Vorspannung der Tragfeder erfolgen, daß die Ruhelage des Lagers, in der also die Anschlagnoppen auf beiden Seiten des Federwegbegrenzers gerade eben lose an den mit ihnen jeweils zusammenwirkenden Anschlagflächen anliegen, unter der statischen Auflast der bestimmungsgemäß dynamisch abzufedernden Masse erreicht wird. Dabei kann, wenn dies für bestimmte Anwendungsbereiche wünschenswert ist, statt der praktisch spannungsfreien Berührung der Anschlagnoppenkronenmit den zugeordneten Anschlagflächen durch ein bestimmtes axiales Übermaß der Knickpuffer eine bestimmte axiale Vorspannung der Anlage der Anschlagnoppenkronen vorgesehen und eingestellt sein, um bei maxiamaler Amplitude ein Abheben oder zumindest zu weites Abheben der Anschlagnoppen auf der "Rückseite" des jeweils aktuell ausgeführten Schwingvorgangs zu vermeiden. Dabei ist mit der "Rückseite" der Schwingung die Richtung gemeint, die der Richtung des Vektors der jeweils momentanen axialen Schwingung entgegensteht.

Eine wesentliche Anforderung an Lager der hier in Rede stehenden Art, insbesondere dann, wenn sie zur Lagerung der Brennkraftmaschine eines Kraftfahrzeugs eingesetzt werden, ist, daß das Lager keinen Körperschall überträgt. Dies heißt, daß das Lager akustische Schwingungen, die lastseitig auftreten, nicht bis auf die Widerlagerbefestigung durchleitet und umgekehrt, widerlagerseitig auftretende akustische Schwingungen auch nicht zur Auflastseite hin überträgt. Dies ist für eine Minderung der Betriebsgeräusche im Fahrgastraum von Kraftfahrzeugen eine wesentliche Voraussetzung für ein akustisch ungestörtes, also konzentriertes und sicheres Benutzen des Kraftfahrzeugs. Dabei wird eine im Hinblick auf eine solche akustische Abkopplung besonders vorteilhafte Lagerkonfiguration erzielt, wenn die Anschlagnoppen der Knickpuffer an den ihnen zugeordneten Anschlagflächen gerade eben lose berührend oder unter einer gewissen Vorspannung anliegend und der Tragfederblock als Elastomerpuffer ausgebildet ist, der mit Scharen untereinander paralleler, einander ohne sich zu schneiden in verschiedenen, axial im Raum verteilten Radialebenen kreuzenden, in regelmäßigen Abständen kugelförmige Hohlräume durchsetzenden Kanälen durchsetzt ist. Ein solcher Tragfederblock zeigt nicht nur in erwünschter Weise bei ausreichender mechanischer Festigkeit eine weite weiche Kennlinie im Arbeitsbereich, sondern wirkt zudem in einer für einen Gummipuffer unerwarteten Weise akustisch entkoppelnd und isolierend.

Die Erfindung ist im folgenden anhand eines Ausführungsbeispiels in Verbindung mit der Zeichnung näher erläutert. Dabei zeigt die einzige Figur der Zeichnung, nämlich die

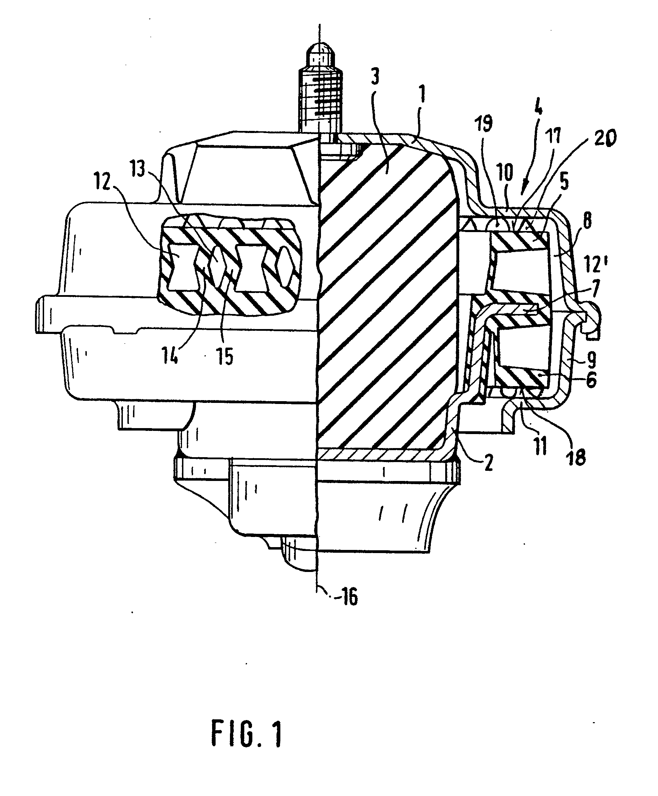

Fig. 1    in axialer Seitensicht, teilweise im Schnitt, ein Ausführungsbeispiel des körperschallisolierenden        weichen Trockenlagers gemäß der Erfindung.

Ein Ausführungsbeispiel des körperschallisolierenden weichen Trockenlagers mit hochgelegtem Arbeitsbereich in der Kennlinie ist, teilweise in Seitensicht, teilweise weggebrochen, teilweise im Axialschnitt in der Fig. 1 dargestellt. Das gezeigte Lager ist ein Motorlager für ein Kraftfahrzeug. Zwischen zwei krafteinleitenden Lagergehäusetöpfen 1, 2 ist ein weicher Tragfederblock 3 aus Gummi eingefügt.

Die beiden Lagergehäusetöpfe 1,2 übergreifen einander mit Spiel koaxial teleskopartig und hintergreifen einander elastomergepuffert unter Bildung eines zweiseitig wirkenden Federwegbegrenzers 4. "Zweiseitig wirksam" heißt dabei, daß der Federweg in der Darstellung der Fig. 1 sowohl nach oben durch einen Gummipuffer als auch nach unten durch einen zweiten Gummipuffer in seiner freien Schwingungsamplitude begrenzt ist. Die beiden Anschlagpuffer des Lagers sind als Knickpuffer 5,6 ausgebildet.

Bei dem hier dargestellten Ausführungsbeispiel des Lagers dient der untere Lagergehäusetopf 2 als Widerlager für die Tragfeder 3 und trägt an seinem oberen Rand einen Außenflansch 7. Der als Auflager dienende obere Lagergehäusetopf 1 weist eine nach radial innen offene Ringkammer 8 auf, in die der Außenflansch 7 des unteren Lagergehäusetopfes 2 eingreift. Dieser Eingriff erfolgt dabei so, daß der Außenflansch 7, der die beiden Knicklager 5,6 trägt, in axialer Richtung die radialen kreisringförmigen Begrenzungsflächen 10,11 der Ringkammer 8 hintergreift, dabei aber unter Einschluß der mit dem Außenflansch 7 eine Einheit bildenden Knickpuffer 5,6 von der radial außenliegenden zylindrischen Mantelwand 9 der Ringkammer 8 einen so ausreichenden Abstand hält, daß zwischen dem Außenrand des Knickpufferringes und der Innenwandfläche des Zylindermantels 9 der Ringkammer 9 auch unter bestimmungsgemäßer dynamischer Betriebsbelastung des Lagers keine Berührung auftritt.

In dem hier dargestellten Ausführungsbeispiel sind die Tragfeder 3 und die Knickpuffer 5,6 konzentrisch in der Weise zueinander angeordnet, daß die Knickpuffer 5,6 die Tragfeder 3 geschlossen in sich umlaufend ringförmig umgeben. Wo dies von der Anwendung her angezeigt ist, kann ein solcher Knickpufferring selbstverständlich auch segmentiert ausgebildet sein.

Die Knickpufferringe 5,6 weisen dabei von der zentralen Tragfeder 3 radial einen solchen Mindestabstand auf, daß die Außenwand der Tragfeder bei maximaler Belastung die Innenwand der Knickpufferringe, hier speziell also die Innenwand des oberen Knickpufferringes 5, nicht berührt. Dadurch wird in jedem Fall eine die Federkennlinie des Gesamtlagers verfälschende unmittelbare Berührungskopplung zwischen den beiden Federgliedern, nämlich der Tragfeder 3 einerseits und dem Knickpuffersystem 5,6 andererseits, ausgeschaltet.

In dem in Fig. 1 gezeigten Ausführungsbeispiel des Lagers ist jeder der beiden Knickpufferringe 5,6 ein Elastomerpufferring, der mit zueinander parallelen und, soweit sie sich durch die Ringöffnung voneinander getrennt gegenüberliegen , koaxialen, in ein und derselben Radialebene liegenden beidseitig offenen Kanälen 12,13 durchsetzt ist. Dabei sind die Querschnitte dieser Kanäle so gestaltet, daß die Kanalwände 14,15 nach Überschreiten einer konstruktiv vorgegebenen axialen Grenzbelastung einknicken, da durch ein Ausbiegen der Kanalwände 14,15 unter Auflast nach Überschreiten einer kritischen Ausbiegung die zur elastischen Rückstellkraft erforderliche durchgehende senkrechte Elastomersäule in diesen Wandbereichen unterbrochen ist.

Die konfigurative Ausbildung eines solchen Knickpufferverhaltens ist dabei in dem hier beschriebenen Ausführungsbeispiel in der aus Fig. 1 ersichtlichen Weise dadurch bewirkt, daß die Querschnitte der Kanäle im Elastomerpufferring der Knickpuffer 5,6 alternierend die Form einer stehenden Raute (Kanal 13) und eines stehenden doppeltrapezförmigen Sechsecks (Kanal 12) mit innenliegender kleiner Basislinie haben. Der Querschnitt des Kanals 12 entspricht also konfigurativ im wesentlichen dem Querschnitt durch eine Sanduhr, wobei jedoch das Sechseck des Profils des Kanals 12 eine breitere Taille als üblicherweise der Querschnitt einer Sanduhr aufweist.

Die Kanäle 12,13 in den Elastomerpufferringen 5,6 verlaufen insbesondere streng parallel zueinander, so daß also ein die Mittelachse 16 des Lagers schneidender Kanal radial verläuft, während die anderen Kanäle parallel zu einem solchen Mittelkanal auf Sekanten, bezogen auf die Radialebene des Lagers, liegen. Dabei ist es weitgehend unwesentlich, ob der unmittelbar an, auf oder in der Peripherie des Elastomerpufferringes liegende Kanal 12′ angeschnitten, in der in Fig. 1 gezeigten Weise vollständig offen, oder gerade vollständig geschlossen ist. Solange das Erfordernis des Eintreten des Knickeffekts in diesen Anschlagpufferringen gewahrt ist, bleibt die Ausgestaltung der Geometrie im einzelnen im Rahmen einer für den Anwendungsfall vorzunehmenden Feinabstimmung dem Fachmann und seinem Durchschnittskönnen vorbehalten.

Der Knickpuffer 5 liegt mit seiner Anschlagfläche 17 der mit dieser Anschlagfläche 17 zusammenwirkenden Radialfläche 18 der Ringkammer 8 gegenüber, während eine entsprechende Anschlagfläche 18 des Knickpuffers 6 der mit ihr als Anschlag zusammenwirkenden Ringfläche 11 der Ringkammer 8 des Gehäuselagertopfes 1 gegenüberliegt.

Auf den beiden Anschlagflächen 17,18 der Knickpuffer 5,6 ist in identischer Weise eine Vielzahl von einander isoliert angeordneter axial vorspringender flacher noppenartiger Erhebungen oder Vorsprünge ausgeformt, die im Rahmen der vorliegenden Beschreibung der Kürze halber als "Anschlagnoppen" 19,20 bezeichnet sind. Während die Anschlagnoppen 19 halbkugelförmig über die Oberflächen der Anschlagflächen 17, 18 der Knickpuffer 5,6 vorstehen, weisen die angeformten und über die plane Oberfläche vorstehenden Anschlagnoppen 20 die Geometrie eines Kegels auf. In beiden Fällen haben die Noppen also im Profil eine relativ breite Basis und eine relativ schmale oder spitze Krone. In dem in Fig. 1 gezeigten Ausführungsbeispiel liegen die Anschlagnoppen 19,20 sowohl des Knickpuffers 5 als auch des Knickpuffers 6 gerade eben lose an den ihnen zugeordneten Ringflächen 10,11 der Ringkammer 8 an. In der aus Fig. 1 ersichtlichen Weise ist dabei diese Ruhestellung des Lagers im unbelasteten Zustand eingestellt. In der Regel wird dieser Ruhezustand jedoch nicht im unbelasteten Zustand des Lagers, sondern unter einer Verformung der Tragfeder 3 eingestellt, die der statischen Auflast der bestimmungsgemäß dynamisch abzufedernden Masse entspricht.

In dem hier gezeigten Ausführungsbeispiel sind die Knickpufferringe 5,6 mit den auf deren Oberflächen 17,18 gleichmäßig verteilten Anschlagnoppen 19,20 jeweils identisch zueinander ausgebildet. Dies bewirkt, daß das in der Fig. 1 gezeigte Lager ein um die in der Fig. dargestellte Ruhelage zwar gedämpftes, im übrigen jedoch symmetrisches Schwingverhalten zeigt. Für Anwendungsbereiche, in denen ein asymmetrisches Schwingverhalten des Lagers wünschenswert ist, kann dies in einfacher Weise durch eine unterschiedliche Ausgestaltung der Knickpuffer 5,6 voneinander erfolgen.

Der Tragfederblock 3 ist in einer hier in der Fig. aus Gründen der übersichtlichen Darstellung nicht gezeigten Weise ein Elastomerpuffer, der mit Scharen untereinander paralleler, einander ohne sich zu schneiden in verschiedenen Radialebenen kreuzenden, in regelmäßigen Abständen kugelförmige Hohlräume durchsetzenden Kanälen durchsetzt ist. Ein solcherart ausgebildeter Tragfederblock, der an sich aus dem Stand der Technik bekannt ist, zeichnet sich bei hoher mechanischer Festigkeit durch einen weiten und weichen linearen Kennlinienverlauf aus, der als Arbeitsbereich nutzbar ist. Dabei sorgen die Knickpuffer 5,6 in der eingangs beschriebenen Art dafür, daß beim Einfedern nicht der gesamte weite lineare Federweg durchlaufen zu werden braucht, sondern ein anfänglicher Auffangbereich mit relativ steiler Kennli-

nie übersprungen werden kann. Diese Federverhältnisse sind jedoch nicht Gegenstand der vorliegenden Erfindung. Entscheidend im Rahmen der vorliegenden Erfindung sind lediglich die Anschlagpuffer 19,20, die auf den Knickpuffern 5,8 ausgebildet sind und in ersichtlicher Weise auch auf Puffern, insbesondere Knickpuffern anderer Ausgestaltung und anderer Art ohne weiteres zu den gleichen Vorteilen einer akustischen Verbesserung des Lagers führen.

## Patentansprüche

1. Körperschallisolierendes weiches Trockenlager mit hochgelegtem Arbeitsbereich in der Kennlinie, insbesondere für eine Brennkraftmaschine, mit einem weichen Tragfederblock (3) aus elastischem Werkstoff zwischen zwei krafteinleitenden Lagergehäusetöpfen (1,2), die einander mit Spiel koaxial teleskopartig übergreifen und unter Bildung eines zweiseitigen Federwegbegrenzers elastomergepuffert einander axial hintergreifen, wobei die Elastomerpuffer des Federwegbegrenzers (4) auf jeder Anschlagseite in Form einer oder einer wirkungsmäßig parallelen Vielzahl von isolierten oder zu einer Federeinheit zusammengefaßten Elastomerfedern (5,6) mit Knickeffekt als Knickpuffer ausgebildet sind,
**gekennzeichnet** durch
eine Vielzahl von voneinander isoliert angeordneten Anschlagnoppen in Form axial vorspringender flacher noppenartiger, stegförmiger oder ringstegförmiger Erhebungen (19,20) auf der Anschlagoberfläche (17,18) der Knickpuffer (5,6).

2. Lager nach Anspruch 1,
dadurch **gekennzeichnet,**
daß der eine der beiden Lagergehäusetöpfe (2) einen Außenflansch (7) trägt und der andere (1) eine nach radial innen offene Ringkammer (8) aufweist, in die der Außenflansch (7) mit axialem und radialem Spiel eingreift, wobei entweder der Außenflansch (7) die Knickpuffer (5,6) beider Anschläge (10,11) des Federwegbegrenzers (4) trägt, und zwar den einen (5) auf seiner zum Gegentopf (1) weisenden Oberseite, den anderen (6) auf seiner Unterseite, oder, daß die Radialflächen (10,11) der Ringkammer (8) die Knickpuffer trägt, zwischen die hinein der Außenflansch (7) des anderen Lagergehäusetopfes (2) ohne oder mit geringem axialem Abstand hineingreift.

3. Lager nach Anspruch 2,
dadurch **gekennzeichnet,**
daß die Knickpuffer (5,6) mit den Anschlagnoppen (19,20) den zentralaxial angeordneten Tragfederblock (3) ringförmig, in sich geschlossen umlaufend oder segmentiert, konzentrisch umschließen, und zwar mit einem solchen radialen Abstand, daß der Tragfederblock (3) auch bei maximaler Belastungsverformung den Knickpufferring (5,6) nicht berührt.

4. Lager nach einem der Ansprüche 1 bis 3,
dadurch **gekennzeichnet,**
daß der Tragfederblock (3) im unbelasteten Lager so gegen eine bestimmungsgemäße Soll-Auflast vorgespannt ist, daß die beiden Knickpuffer (5,6) bei statisch ruhender Soll-Last ihren zugeordneten Anschlägen (10,11) mit einem vorgegebenen Abstand berührungsfrei gegenüberliegen, oder mit einem solchen Abstand gegenüberliegen, daß die Anschlagnoppen (19,20) die zugeordneten Gegenanschlagflächen (10,11) eben gerade lose anliegend berühren.

5. Lager nach einem der Ansprüche 1 bis 4,
dadurch **gekennzeichnet,**
daß die Anschlagnoppen (19,20) im Axialschnittprofil eine Profilbasis aufweisen, die breiter als das Profil der Noppenkrone ist.

6. Lager nach Anspruch 5,
dadurch **gekennzeichnet,**
daß die Noppen (19,20) die Gestalt eines Kegels (20), eines Kegelstumpfes oder einer Halbkugel (19) haben.

7. Lager nach einem der Ansprüche 1 bis 6,
dadurch **gekennzeichnet,**
daß die Anschlagoberflächen (17,18) der Knickpuffer (5,6) jeweils mehr als nur eine Art von Anschlagnoppen (19,20) tragen.

8. Lager nach einem der Ansprüche 1 bis 7,
dadurch **gekennzeichnet,**
daß der Tragfederblock (3) ein Elastomerpuffer ist, der mit Scharen untereinander paralleler , einander ohne sich zu schneiden in verschiedenen Radialebenen kreuzenden, in regelmäßigen Abständen kugelförmige Hohlräume durchsetzenden Kanälen durchsetzt ist.

## Claims

1. A soft dry mounting for insulating body-transmitted acoustic waves comprising an elevated working range within the characteristic curve, in particular for mounting an internal combustion engine, said mounting comprising a soft support spring block (3) made of an elastic material and being disposed between two beaker-type housing parts (1,2), which serve to transfer load forces into said soft support spring block, which are arranged coaxially and which are telescopingly inserted into one another in a radially spaced and axially mutually restrictive relationship so as to form means for restricting and limiting the deflection path of the support spring block using ancillary elastomer buffers, wherein the elastomer buffers on each end stop side of the means (4) for restricting and limiting the deflection path are either one single elastomer spring or an elastomer spring device comprising a plurality of elastomer spring elements (5,6) acting in parallel, each spring element being a buffer with a kinking effect,

**characterized** by

a plurality of nap-type end stop means arranged separately from each other in the shape of axially protruding flat nap-type, web-type or ring-shaped web-type protrusions (19,20) on the end stop surface (17,18) of the buffers comprising the kinking effect (5,6).

2. A mounting according to claim 1,
**characterized** in
that the first beaker-type housing part (2) comprises an external flange (7) and the second beaker-type housing part (2) comprises an annular chamber (8) open radially inwards, into which chamber the external flange (7) is protruding in a radially and axially spaced relationship, wherein either the external flange (7) is supporting the buffers having the kinking effect (5,6) of both end stop means (10,11) of the means (4) for restricting and limiting the deflection path, whereat the first buffer (5) is arranged on the upper side of the external flange (7) facing the second beaker-type housing part (1) and the second buffer (6) is arranged on the lower side of the external flange, or the radial surfaces (10,11) of the annular chamber (8) are supporting the buffers comprising the kinking effect, between which radial surfaces the external flange (7) of the first beaker-type housing part (2) is inserted without any or with only a small axial distance in between.

3. A mounting according to claim 2,
**characterized** in
that the buffers having the kinking effect (5,6) and supporting the nap-type end stop means (19,20) are enclosing concentrically the support spring block (3) arranged centrally and axially like a ring either circularly-closed or split-up in segments, wherein the radial distance between the buffers comprising the kinking effect (5,6) and the support spring block (3) is dimensioned such that they do not contact each other, even when having a maximum deflection caused by an external load.

4. A mounting according to one of the claims 1 to 3,
**characterized** in
that the support spring block (3), when there is no load acting on the mounting, is pre-stressed with respect to a predetermined load, so that the buffers comprising the kinking effect (5,6), when the predetermined load acting statically, are lying opposite the adjacent end stop means (10,11) with a certain predetermined distance in between without any contact or comprising such a distance that the nap-type end stop means (19,20) are slightly touching the opposite end stop surfaces (10,11).

5. A mounting according to one of the claims 1 to 4,
**characterized** in
that the nap-type end stop means (19,20) are comprising in an axial section a profile wherein the width on the base is larger than the width on the top of the naps.

6. A mounting according to claim 5,
**characterized** in
that the naps (19,20) are shaped like a cone (20), a truncated cone or a semi-sphere.

7. A mounting according to one of the claims 1 to 6,
**characterized** in
that the end stop surfaces (17,18) of the buffers comprising the kinking effect (5,6) are supporting more than one type of nap-type end stop means (19,20), each.

8. A mounting according to one of the claims 1 to 7,
**characterized** in
that the support spring block (3) is an elastomer buffer interspersed with groups of mutually parallel channels, said groups crossing each other in different radial planes without intersecting and said channels intersecting spherical cavities disposed regularly.

**Revendications**

1. Support non-hydraulique souple amortisseur de bruit de structure, comportant une zone de fonctionnement élevée dans sa courbe caractéristique, en particulier pour une machine à combustion interne, comportant un bloc support souple (3) en matière élastique entre deux pots (1, 2) formant boîtier du support, reprenant les efforts, qui s'emboîtent l'un dans l'autre en se recouvrent avec du jeu axialement, de façon télescopique, et en se reprenant par derrière en formant un tampon élastomère, en réalisant un limiteur élastique de course agissant dans les deux sens, étant entendu que le tampon d'élastomère du limiteur élastique de course (4) est réalisé, sur chacune des faces d'appui, sous la forme d'un ou d'un grand nombre de ressorts élastomères (5, 6), isolés ou rassemblés en une unité élastique, à effet parallèle, agissant en accordéon, sous la forme de tampons en accordéon,
caractérisé par
un grand nombre de boutons de butée disposés isolément les uns par rapport aux autres, sous la forme de bosses (19, 20) dépassant axialement, en forme de boutons plats, ou de barrettes ou de bagues annulaires, sur la surface supérieure de butée (17, 18) des tampons en accordéon (5, 6).

2. Support suivant la revendication 1, caractérisé en ce que l'un des deux pots formant boîtier du support (2) porte une paroi extérieure (7) et que l'autre (1) présente une chambre annulaire (8) ouverte radialement vers l'intérieur, dans laquelle la paroi extérieure (7) vient s'emboîter avec un jeu radial et axial, étant entendu ou bien que la paroi extérieure (7) porte les tampons en accordéon (5, 6) des deux butées d'appui (10, 11) du limiteur élastique de course (4), c'est-à-dire l'un (5) sur sa face supérieure tournée vers le pot complémentaire 1 et l'autre (6) sur sa face inférieure, ou bien que les surfaces radiales (10, 11) de la chambre annulaire (8) portent les tampons en accordéon, entre lesquels la paroi extérieure (7) de l'autre pot (2) du boîtier du support pénètre et vient faire prise sans jeu axial, ou avec un jeu axial faible.

3. Support suivant la revendication 2, caractérisé en ce que les tampons en accordéon (5,6) comportant les boutons de butée (19, 20) entourent le bloc ressort support (3), centré axialement, en formant un anneau concentrique, se refermant sur lui-même de façon continue ou en segments, et cela avec une distance radiale telle que le bloc ressort support ne touche pas, même dans le cas de déformation maximale sous charge, l'anneau (5, 6) du tampon en accordéon.

4. Support suivant l'une quelconque des revendications 1 à 3, caractérisé en ce que le bloc élastique porteur (3) est mis en serrage dans le support sans charge pour s'opposer à une valeur de consigne, pré-définie, de la charge, de telle façon que les deux tampons en accordéon (5, 6) soient, pour une charge statique fixe de consigne, placés, sans contact, en face de leurs butées respectives (10, 11), à une distance prédéterminée, ou bien soient situés en face à une distance telle que les boutons de butée (19, 20) touchent les surfaces de contre-butée associées (10,11) en étant juste libres.

5. Support suivant l'une quelconque des revendications 1 à 4, caractérisé en ce que les boutons de butée (19, 20) présentent, en coupe axiale, un profit à la base qui est plus large que le profil du couronnement des boutons.

6. Support suivant la revendication 5, caractérisé en ce que les boutons (19, 20) ont l'allure d'un cône (20), d'un tronc de cône ou d'une demi-sphère (19).

7. Support suivant l'une quelconque des revendications 1 à 6, caractérisé en ce que les surfaces supérieures de butée (17, 18) des tampons en accordéon (5, 6) portent chacun plus d'une seule sorte de boutons de butée (19, 20).

8. Support suivant l'une quelconque des revendications 1 à 7, caractérisé en ce que le bloc élastique porteur (3) est un tampon d'élastomère, qui est traversé par des réseaux de canaux parallèles entre eux, se croisant entre eux, sans se recouper, dans des plans radiaux différents, et traversant, à des distances régulières, des espaces creux de forme sphérique.

FIG. 1